# EUROPEAN PATENT SPECIFICATION

(11) **EP 0 464 929 B1**
(45) Date of publication and mention of the grant of the patent: **08.02.1995**
(21) Application number: 91201642.5
(22) Date of filing: 27.06.1991
(51) Int. Cl.: B60K 7/00, B61C 9/46, B60L 15/08

(54) **Wheel-electrical motor assembly for bogies for rail and tram vehicles**
Eine im Rad angeordnete, elektrische Antriebseinrichtung für Radgestelle von Eisenbahn- und Strassenbahnfahrzeugen
Ensemble de propulsion électrique disposé dans une roue pour bogies de véhicules ferroviaires et de tramways

(30) Priority: 03.07.1990 IT 2084390
(43) Date of publication of application: 08.01.1992
(73) Proprietor: ELETTROMECCANICA PARIZZI S.p.A, I-20125 Milan (IT)
(72) Inventor: Fuga, Ferdinando, I-20052 Monza-Milan (IT); Farini, Amedeo, I-20090 Rodano-Milan (IT); Braga, Alessio, I-27058 Voghera-Pavia (IT)
(74) Representative: Henke, Erwin

(56) References cited:
- EP-A- 0 337 032
- DE-A- 2 719 736
- US-A- 4 585 085

## Description

The present invention relates to a bogie with a wheel-electrical motor assembly for rail or tram vehicles according to the preamble of claim 1 and known from document EP-A-0 337 032.

More particularly, the present invention relates to distributed-drive bogies with a wheel-electrical motor assembly.

Distributed-drive bogies are known, in which independent motors are linked to the wheels by means of relevant reduction gear. Such a structure entails a periodical servicing of the mechanical organs, with time-wasting dismantling and reassembling operations being hence necessary.

Other bogies for rail or tram vehicles are equipped with one single motor which transmits the driving motion to the wheels by means of one pair of reduction gears, but which, owing to their overall height dimensions cannot be used for the lowered-platform cars which have been increasingly used during the past years.

A purpose or the present invention is of providing a bogie with a wheel-electrical motor assembly which makes it possible, thanks to its smaller overall dimensions, simple and reliable distributed-drive bogies for rail and tram vehicles to be provided.

Another purpose if of reducing the problems connected with the servicing, to a meaningful extent.

In order to achieve such purposes, a bogie with a wheel-electrical motor assembly for rail or tram vehicles was developed, in which on a support of said bogie a stationary axle is provided, on which a wheel-hub integral with a tread is rotatably mounted, said wheel-hub being contoured and stably supports the inductor of a permanent magnet motor, with the armature of said motor being fastened onto said stationary axle in order to discharge onto said bogie a reaction torque, and with a plate bearing a terminal box being furthermore fastened onto said armature, which terminal box is connected with a power supply/control unit, characterised in that shock-absorber means are interposed between said wheel-hub and said tread, said permanent-magnet motor is a synchronous motor and said contoured wheel-hub has an annular groove, inside which a portion of said inductor, having an outline substantially parallel to the contour of said wheel-hub and its annular groove, is housed.

In particular, according to the present invention, said inductor and said armature are housed inside a sheltering case fastened onto said armature.

Furthermore, according to a preferred form of practical embodiment, said power supply/control unit is a variable-voltage, variable-frequency inverter unit.

Still according to the present invention, said inductor is fastened onto said wheel-hub by means of a plurality of bolts arranged in ring-like pattern.

The armature of said synchronous motor is fastened onto said stationary axle by means of bolts.

Furthermore, between said stationary axle and said wheel-hub, thrust bearings are provided.

According to a preferred form of practical embodiment, said permanent-magnet synchronous motor is a large-pole-number motor.

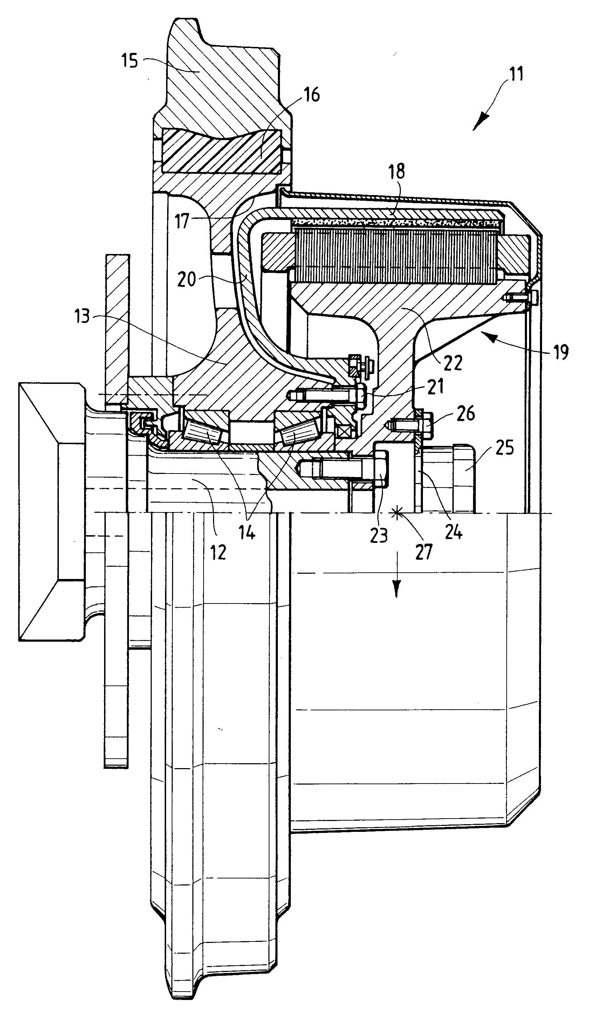

In order to better understand the characteristics and further advantages of the present invention, an embodiment of said invention is disclosed in the following by referring to the accompanying drawing table, in which the single figure shows a partially sectional view of a bogie with a wheel-electrical motor assembly according to an embodiment of the instant invention.

Referring to the single accompanying figure, a wheel-electrical motor assembly is indicated by the reference numeral 11, and is constituted by an axle 12 fastened onto a bogie (not depicted in the figure), on which axle 12 a wheel-hub 13 is rotatably mounted with the interposition of thrust bearings 14.

Externally to the wheel-hub 13 and coaxially with it, a tread 15 is provided, and, between the latter and the hub a plurality of rubber-made shock absorber means 16 are interposed, to act as primary shock absorber means. Inside the wheel-hub 13 a contoured annular groove 17 is provided, inside which the inductor 18 of a synchronous, large-pole-number motor, generally indicated with the reference numeral 19, is housed.

A portion 20 of the inductor 18 is so contoured, as to have an outline which is approximately parallel to the contoured annular groove 17 of the wheel-hub 13. Said inductor 18 is fastened onto said wheel-hub 13 by means of a plurality of bolts 21, arranged in a ring-like pattern.

On the contrary, the armature 22 of the synchronous motor 19 is fastened, by means of bolts 23, to the axle 12, thus transmitting the reaction torque to the bogie (not depicted in the figure); on a plate 24 fastened by means of bolts 26 onto the armature 22, a terminal box 25 is provided, by means of which the motor 19 is connected with a power supply/control unit of variable-voltage, variable frequency inverter type.
(not depicted in the figure).

The solution proposed according to the present invention displays particular advantages when independent-wheel bogies studied for lowered-platform rail and tram vehicles designed for use in urban networks and tortuous-route railways are taken into consideration.

In particular, according to the present invention, the direct application of the electrical motor onto the wheel is achieved without a reduction gear having to be interposed, thanks to the inductor being accomplished along the perimeter of the electrical machine, thus enabling a larger drive torque to be supplied, with the weight and overall dimensions being the same as of traditional motors.

The figure evidence the simplicity and reliability of the instant accomplishment, in which the wheel-hub supports the inductor which directly transmits the drive torque, whilst the armature --practically fastened onto the bogie -- discharges onto said bogie the reaction torque, without the aid of bars external to the wheel.

According to the typical form of practical embodiment of the present invention, the electrical motor is a large-pole-number motor, in order to minimize the mass of the magnetic circuit, with the other passive parts of the electrical motor being made from a light alloy, hence contributing to the total mass to a small extent only.

Another special feature of the typical form of practical embodiment is the motor protruding from the wheel contour for a short length only, with advantages as regards the exploitation of the clearance gauge, and also due to the fact that the barycentre 27 of the motor comes to lay in the nearby of the bearings of the wheel.

The absolute absence of mechanical organs amenable to wear is of particular importance, because the independent-wheel bogies are equipped with one motor per each individual wheel, which means a large number of motors per each car with no servicing problems.

The flexibility of the control of the motors enables the bogie to easily enter, and run along, short-radius bends, with the noise caused by the whee-track friction being consequently reduced.

In an application for rail and tram vehicles with distributed drive power, each of said wheel-electrical motor assemblies can be fed by means of one power supply/control unit of inverter type equipped with its own torque/rpm regulator, whilst a central pilot unit is interfaced with the control board and with a number of power supply/control units which equates the number of the available wheel-electrical motors assemblies, with control, supervision, diagnostic and safety tasks.

## Claims

1. Bogie with a wheel-electrical motor assembly for rail or tram vehicles, in which on a support of said bogie a stationary axle (12) is provided, on which a wheel-hub (13) integral with a tread (15) is rotatably mounted, said wheel-hub (13) being contoured and stably supports the inductor (18) of a permanent magnet motor (19), with the armature (22) of said motor (19) being fastened onto said stationary axle (12) in order to discharge onto said bogie a reaction torque, and with a plate (24) bearing a terminal box (25) being furthermore fastened onto said armature (22), which terminal box (25) is connected with a power supply/control unit, characterised in that shock-absorber means (16) are interposed between said wheel-hub (13) and said tread (15), said permanent-magnet motor (19) is a synchronous motor (19) and said contoured wheel-hub (13) has an annular groove (17), inside which a portion (20) of said inductor (18), having an outline substantially parallel to the contour of said wheel-hub (13) and its annular groove (17), is housed.

2. Bogie with a wheel-electrical motor assembly according to claim 1, characterized in that said inductor (18) and said armature (22) are housed inside a sheltering case fastened onto said armature (22).

3. Bogie with a wheel-electrical motor assembly according to claim 1, characterized in that said power supply/control unit is of variable-voltage, variable frequency inverter type.

4. Bogie with a wheel-electrical motor assembly according to claim 1, characterized in that said inductor (18) is fastened onto said wheel-hub (13) by means of plurality of bolts (21) positioned in a ring-like pattern.

5. Bogie with a wheel-electrical motor assembly according to claim 1, characterized in that said armature (22) of said synchronous motor (19) is fastened onto said stationary axle (12) by means of bolts (23).

6. Bogie with a wheel-electrical motor assembly according to claim 1, characterized in that between said stationary axle (12) and said wheel-hub (13), thrust bearings (14) are provided.

7. Bogie with a wheel-electrical motor assembly according to claim 1, characterized in that said permanent-magnet synchronous motor (19) is a large-pole-number motor (19).

## Patentansprüche

1. Radgestell mit einer im Rad angeordneten elektrischen Motoranordnung für ein Eisenbahn- oder Straßenbahnfahrzeug, worin an einem Träger des genannten Radgestells eine ortsfeste Achse (12) vorgesehen ist, an der eine in einen Schienenlaufkranz (15) integrierte Radnahe (13) drehbar angebracht ist, wobei die genannte Radnabe (13) profiliert ist und fest den Induktor (18) eines Motors mit Permanentmagneten (19) abstützt, wobei der Anker (22) des genannten Motors (19) an der genannten ortsfesten Achse (12) befestigt ist, um an das genannte Radgestell ein Reaktions-Drehmoment abzugeben, und wobei eine Platte (24), die einen Anschlußkasten (25) trägt, ferner am genannten Anker (22) befestigt ist, welcher Anschlußkasten (25) mit einer Strom-Versorgungs-/Regeleinheit verbunden ist, dadurch **gekennzeichnet,** daß Stoßdämpfermittel (16) zwischen der genannten Radnabe (13) und dem genannten Schienenlaufkranz (15) eingesetzt sind, der genannte Motor mit Permanentmagneten (19) ein Synchronmotor (19) ist und die genannte profilierte Radnabe (13) eine Ringnut (17) aufweist, innerhalb deren ein Anschnitt (20) des genannten Induktors (18) aufgenommen ist, der eine Umrißlinie aufweist, die im wesentlichen parallel zur Kontur der genannten Radnabe (13) und ihrer Ringnut (17) verläuft.

2. Radgestell mit einer in einem Rad angeordneten elektrischen Motoranordnung nach Anspruch 1, dadurch **gekennzeichnet,** daß der genannte Induktor (18) und der genannte Anker (22) im Inneren eines Aufnahmegehäuses aufgenommen sind, das am genannten Anker (22) befestigt ist.

3. Radgestell mit einer in einem Rad angeordneten elektrischen Motoranordnung nach Anspruch 1, dadurch **gekennzeichnet,** daß die genannte Strom-Versorgungs-/Regeleinheit der Art nach eine Umkehrstufe bzw. ein Wechselrichter mit variabler Spannung und variabler Frequenz ist.

4. Radgestell mit einer im Rad angeordneten elektrischen Motoranordnung nach Anspruch 1, dadurch **gekennzeichnet,** daß der genannte Induktor (18) an der genannten Radnahe (13) mittels einer Vielzahl von Maschinenschrauben (21) befestigt ist, die in einem ringförmigen Muster angeordnet sind.

5. Radgestell mit einer im Rad angeordneten elektrischen Motoranordnung nach Anspruch 1, dadurch **gekennzeichnet,** daß der genannte Anker (22) des genannten Synchronmotors (19) an der genannten ortsfesten Achse (12) mittels Maschinenschrauben (23) befestigt ist.

6. Radgestell mit einer im Rad angeordneten elektrischen Motoranordnung nach Anspruch 1, dadurch **gekennzeichnet,** daß zwischen der genannten ortsfesten Achse (12) und der genannten Radnabe (13) Schublager (14) vorgesehen sind.

7. Radgestell mit einer im Rad angeordneten elektrischen Motoranordnung nach Anspruch 1, dadurch **gekennzeichnet,** daß der Synchronmotor (19) ein Motor mit Permanentmagneten (19) mit großer Polzahl ist.

## Revendications

1. Bogie avec un ensemble de propulsion électrique dans une roue de véhicules ferroviaires ou des tramways dans lequel est prévu, sur un support dudit bogie, un essieu fixe (12) sur lequel est monté rotatif, un moyeu de roue (13) solidaire d'une bande de roulement (15), ledit moyeu de roue (13) étant profilé et supportant de façon stable l'inducteur (18) d'un moteur à aimant permanent (19), l'armature (22) dudit moteur (19) étant fixée sur ledit essieu fixe (12) de façon à délivrer sur ledit bogie un couple de réaction, et une plaque (24) portant une boîte de connexions (25) étant de plus fixée sur ladite armature (22), ladite boîte de connexions (25) étant encore reliée à une unité de contrôle/alimentation, caractérisé en ce que des moyens d'absorption de chocs (16) sont interposés entre ledit moyeu de roue (13) et ladite bande de roulement (15), ledit moteur à aimant permanent (19) est un moteur synchrone (19) et ledit moyeu de roue (13) profilé présente une gorge annulaire (17) dans laquelle est logée une partie (20) dudit inducteur (18) qui a un profil pratiquement paralléle à celui dudit moyeu de roue (13) et de sa gorge annulaire (17).

2. Bogie avec un ensemble de propulsion électrique selon la revendication 1, caractérisé en ce que ledit inducteur (18) et ladite armature (22) sont logés à l'intérieur d'un boîtier de protection fixé sur ladite armature (22).

3. Bogie avec un ensemble de propulsion électrique selon la revendication 1, caractérisé en ce que ladite unité de contrôle/alimentation est du type onduleur à tension variable et fréquence variable.

4. Bogie avec un ensemble de propulsion électrique selon la revendication 1, caractérisé en ce que ledit inducteur (18) est fixé sur ledit moyeu de roue (13) au moyen d'une pluralité de boulons (21) placés en anneau.

5. Bogie avec un ensemble de propulsion électrique selon la revendication 1, caractérisé en ce que ladite armature (22) dudit moteur synchrone (19) est fixée sur ledit essieu fixe (12) au moyen de boulons (23).

6. Bogie avec un ensemble de propulsion électrique selon la revendication 1, caractérisé en ce que des paliers de poussée (14) sont prévue entre ledit essieu fixe (12) et ledit moyeu de roue (13).

7. Bogie avec un ensemble de propulsion électrique selon la revendication 1, caractérisé en ce que ledit moteur synchrone à aimant permanent (19) est un moteur à grand nombre de pôles (19).
